# EUROPÄISCHE PATENTSCHRIFT

(11) **EP 2 719 909 B1**
(45) Veröffentlichungstag und Bekanntmachung des Hinweises auf die Patenterteilung: **13.07.2016**
(21) Anmeldenummer: 13188345.6
(22) Anmeldetag: 11.10.2013
(51) Int. Cl.: F16C 33/66, F16C 19/26

(54) **Wälzlager**
Roller bearing
Palier à roulement

(30) Priorität: 12.10.2012 DE 102012218638
(43) Veröffentlichungstag der Anmeldung: 16.04.2014
(73) Patentinhaber: Aktiebolaget SKF, 415 50 Göteborg (SE)
(72) Erfinder: Forster, Thomas, 3340 Waidhofen (AT); Weninger, Helmut, 4400 Steyr (AT); Zauner, Matthias, 4523 Sierninghofen (AT)
(74) Vertreter: Schonecke, Mitja

(56) Entgegenhaltungen:
- EP-A1- 1 990 554
- DE-A1- 4 138 867
- DE-U1- 7 902 911

## Beschreibung

Die Erfindung betrifft ein Wälzlager, umfassend einen Innenring und einen Außenring, wobei zwischen Innenring und Außenring mindestens eine Reihe Wälzkörper angeordnet ist, wobei mindestens ein Schmierelement am Wälzlager angeordnet ist, mit dem Schmierstoff in den Bereich der Wälzkörper eingebracht werden kann, wobei im Wälzlager ein Aufnahmeraum für verbrauchten Schmierstoff angeordnet ist, der von der Austrittsöffnung des mindestens einen Schmierelements abgeteilt ist.

Ein gattungsgemäßes Wälzlager ist aus der EP 1 990 554 A1 und aus der DE 79 02 911 U1 bekannt. Die DE 41 38 867 A1 zeigt ein Sensorlager.

Insbesondere im Bereich des Schienenfahrzeugbaus und hier bei elektrischen Fahrmotoren des Schienenfahrzeugs kommen Lagereinheiten zum Einsatz (zumeist als Zylinderrollenlager oder als Rillenkugellager ausgebildet), die eine Lebensdauerschmierung aufweisen. Demgemäß ist der Bereich der Wälzkörper des Lagers mit einer solchen Menge Schmierstoff (Schmierfett) gefüllt, die für die Gebrauchsdauer des Lagers ausreichend erscheint. Die Lager sind mit einer Dichtung versehen, so dass das eingebrachte Schmierfett im Lager verbleibt.

Der Anwender solcher Lager zielt auf eine höchstmögliche Lebensdauer des Fahrmotors ab, um Wartungszeit und Wartungskosten gering zu halten, was eine entsprechende Gebrauchsdauer des eingesetzten Wälzlagers bzw. der eingesetzten Wälzlager erfordert. Die Schwachstelle ist hier meist die Gebrauchsdauer des Schmierfetts, die auch die Gebrauchsdauer des Lagers begrenzt.

Der Erfindung liegt die Aufgabe zugrunde, ein gattungsgemäßes Wälzlager so fortzubilden, dass insbesondere bei der Anwendung in einem Fahrmotor eines Schienenfahrzeugs eine höhere Gebrauchsdauer des Wälzlagers gewährleistet werden kann. Damit sollen die Betriebskosten im Betrieb der Anwendung möglichst gering gehalten werden. Das Lager soll sich auch durch ein günstiges Umweltverhalten auszeichnen; demgemäß soll der Verlust an Schmierstoff minimiert werden.

Die Lösung dieser Aufgabe durch die Erfindung ist dadurch gekennzeichnet, dass die Abteilung des Aufnahmeraums durch einen am Innenring angeordneten ersten Ring mit einem sich radial nach außen erstreckenden Abschnitt und durch einen am Außenring angeordneten zweiten Ring mit einem sich radial nach innen erstreckenden Abschnitt erfolgt, wobei das Wälzlager weiterhin mindestens ein seitlich angeordnetes Deckelelement aufweist, das am Außenring befestigt ist, wobei der Aufnahmeraum von dem Deckelelement, von dem ersten Ring und von dem zweiten Ring begrenzt wird, wobei zwischen einem sich axial erstreckenden Abschnitt des Deckelelements und einem zylindrischen Abschnitt des Innenrings - zwecks einfacher und dennoch zuverlässiger Dichtung - ein Labyrinthspalt ausgebildet wird und wobei ein weiterer Labyrinthspalt zwischen dem sich axial erstreckenden Abschnitt des Deckelelements und dem am Innenring angeordneten ersten Ring ausgebildet wird.

Die Austrittsöffnung des Schmierelements liegt gemäß einer bevorzugten Ausgestaltung der Erfindung in einem linken oder rechten Seitenbereich der Wälzkörper. Sie kann alternativ aber auch in einem axialen Endbereich der Laufbahn des Außenrings liegen; in diesem Falle kommt bevorzugt ein Freistich im axialen Endbereich der Laufbahn in Frage, in den der Schmierstoff eingeleitet wird.

Das Deckelelement kann mit einem sich axial erstreckenden Abschnitt auf einem zylindrischen Sitz eines Trägerabschnitts des Außenrings angeordnet sein.

Das Wälzlager ist gemäß einer Weiterbildung mit einem Sensorelement versehen, wobei das Sensorelement vorzugsweise in eines der Deckelelemente eingebaut ist. Bevorzugt ist in diesem Falle vorgesehen, dass das Sensorelement als Element zur Erfassung der Drehzahl des Wälzlagers ausgebildet ist, wobei ein sich im Betrieb des Wälzlagers drehender Ring als Impulsgeber (Magnetring) ausgebildet ist.

Das Wälzlager ist bevorzugt ein Lager eines Fahrmotors eines Schienenfahrzeugs. Die vorgeschlagene Konzeption eines Wälzlagers kommt also besonders bevorzugt in einem Fahrmotor eines Schienenfahrzeugs (TMBU - Traction Motor Bearing Unit) zum Einsatz. Das Wälzlager ist nachschmierbar, so dass die Gebrauchsdauer des Lagers und somit des Fahrmotors verlängert werden können. Gegebenenfalls vorgesehene Wartungsintervalle können erhöht werden.

Das Lager ist insbesondere als Zylinderrollenlager oder als Rillenkugellager ausgebildet.

In der Zeichnung sind Ausführungsbeispiele der Erfindung dargestellt. Es zeigen:
- Fig. 1: im Radialschnitt ein Wälzlager eines Eisenbahn-Fahrmotors gemäß einer ersten Ausführungsform der Erfindung,
- Fig. 2: im Radialschnitt das Wälzlager nach Fig. 1 gemäß einer zweiten Ausführungsform der Erfindung,
- Fig. 3: im Radialschnitt das Wälzlager nach Fig. 1 gemäß einer dritten Ausführungsform der Erfindung,
- Fig. 4: im Radialschnitt das Wälzlager nach Fig. 1 gemäß einer vierten Ausführungsform der Erfindung.
- Fig. 5: im Radialschnitt das Wälzlager nach Fig. 1 gemäß einer fünften Ausführungsform der Erfindung und
- Fig. 6: die Ansicht einer Ausführungsform des Wälzlagers, in Richtung der Drehachse gesehen, mit integriertem Sensor.

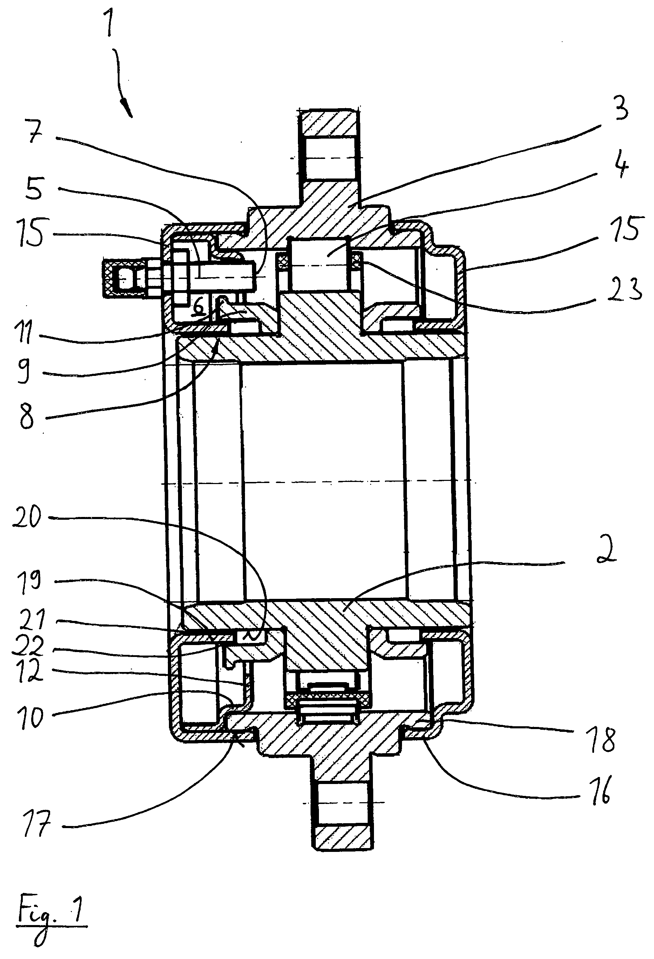

In Fig. 1 ist ein erstes Ausführungsbeispiel der Erfindung skizziert. Zu erkennen ist ein Wälzlager 1 mit einem Innenring 2 und einem Außenring 3, wobei Wälzkörper 4 zwischen den Ringen 2, 3 angeordnet sind. Diese werden von einem Käfig 23 geführt.

Wesentlich ist, dass ein Schmierelement 5 am Wälzlager 1 angeordnet ist. Mit diesem kann Schmierstoff - insbesondere Schmierfett - in den Bereich der Wälzkörper 4 eingebracht werden. Im Wälzlager 1 ist ferner ein Aufnahmeraum 6 für verbrauchten Schmierstoff angeordnet, der von der Austrittsöffnung 7 des Schmierelements 5 abgeteilt ist. Diese Abteilung 8 wird durch einen ersten Ring 9 und einen zweiten Ring 10 hergestellt. Der erste Ring 9 ist mit dem Innenring 2 drehfest verbunden und hat einen sich radial nach außen erstreckenden Abschnitt 11. Der zweite Ring 10 ist am Außenring 3 befestigt. Er ist ein gebogenes Blechteil, das einen sich radial nach innen erstreckenden Abschnitt 12 aufweist. Beidseitig, d. h. in den beiden axialen Endbereichen des Wälzlagers 1, ist je ein Deckelelement 15 angeordnet. Das Deckelelement 15 hat einen sich axial erstreckenden Abschnitt 16. Mit diesem Abschnitt sitzt das Deckelelement 15 auf einem zylindrischen Sitz 17 eines Trägerabschnitts 18, der am Außenring 3 angeformt ist.

Die Deckelelemente 15 stellen eine berührungslose Dichtung zwischen dem Innenring 2 und dem Außenring 3 her. Hierzu weist der Innenring 2 einen zylindrischen Abschnitt 20 auf. Das Deckelelement 15 hat indes einen sich axial erstreckenden Abschnitt 19. Das Deckelelement 15 mit besagtem sich axial erstreckenden Abschnitt 19 ist so ausgebildet, dass sich im montierten Zustand des Deckelelements 15 ein Labyrinthspalt 21 zwischen dem Innenring 2 und dem Deckelelement 15 ausbildet.

Der erste Ring 9 kann auch so ausgeführt sein, dass sich hier zwischen einer radial nach innen weisenden zylindrischen Fläche des ersten Rings 9 und der radial nach außen weisenden zylindrischen Fläche des sich axial erstreckenden Abschnitts 19 des Deckelelements 15 ein weiterer Labyrinthspalt 22 ergibt.

Verbrauchtes Schmierfett, das sich zwischen den Lagerringen 2, 3 befindet, kann so nach dem Verbrauch in den Aufnahmeraum 6 gelangen, wenn neues Schmierfett über das Schmierelement 5 im linken Seitenbereich der Wälzkörper 4 eingespritzt wird. Sicher wird nicht nur verbrauchtes Schmierfett in den Aufnahmeraum 6 gelangen; zumeist wird es sich um eine Mischung von verbrauchtem und neuem Fett handeln.

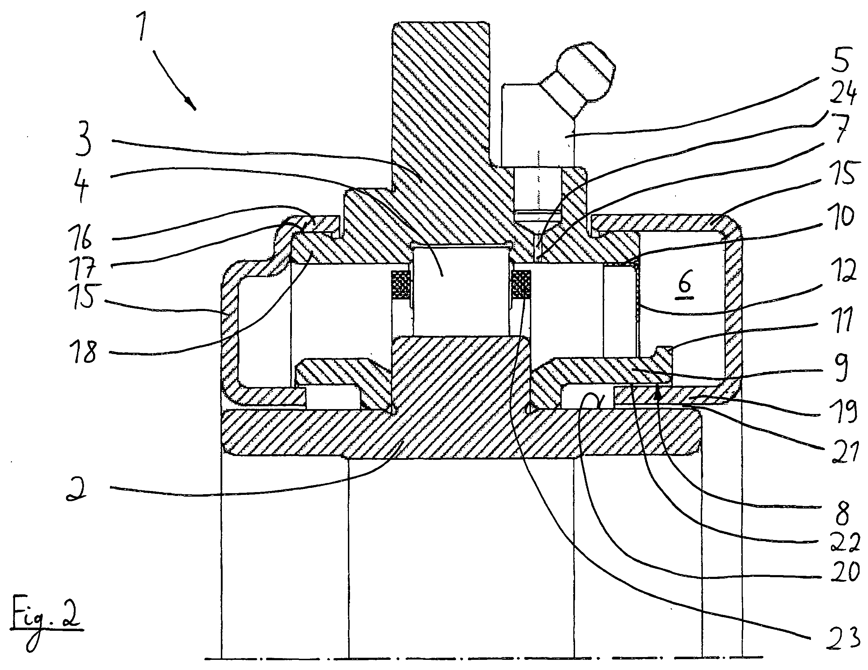

Wie bei Fig. 1 zeigt auch Fig. 2 eine Lösung, bei der das neue Schmierfett über ein Schmierelement 5 eingespritzt wird, so dass es benachbart zu einem axialen Endbereich der Wälzkörper 4 ins Innere des Wälzlagers 1 gelangt. Die in Fig. 2 gezeigte Konzeption entspricht ansonsten derjenigen gemäß Fig. 1. Demgemäß ist auch hier ein Aufnahmeraum 6 vorgesehen, der durch das Deckelelement 15, den ersten Ring 9 und den zweiten Ring 10 begrenzt wird. In diesen Aufnahmeraum 6 gelangt beim Nachschmieren (auch) das verbrauchte Schmierfett.

Im Gegensatz zu Fig. 1 ist bei Fig. 2 vorgesehen, dass das Schmierelement 5 (Schmiernippel) im Außenring 3 befestigt ist. Das Schmierelement 5 ist in einer Gewindebohrung im Außenring 3 angeordnet, die in eine dünne Bohrung 24 übergeht, die an ihrem Auslass die Austrittsöffnung 7 des Schmierelements 5 bildet.

Indes sitzt der Schmiernippel 5 im Falle der Lösung nach Fig. 1 direkt in (linken) Deckelelement 15 und ragt in Richtung der Wälzkörper 4 in das Lagerinnere hinein.

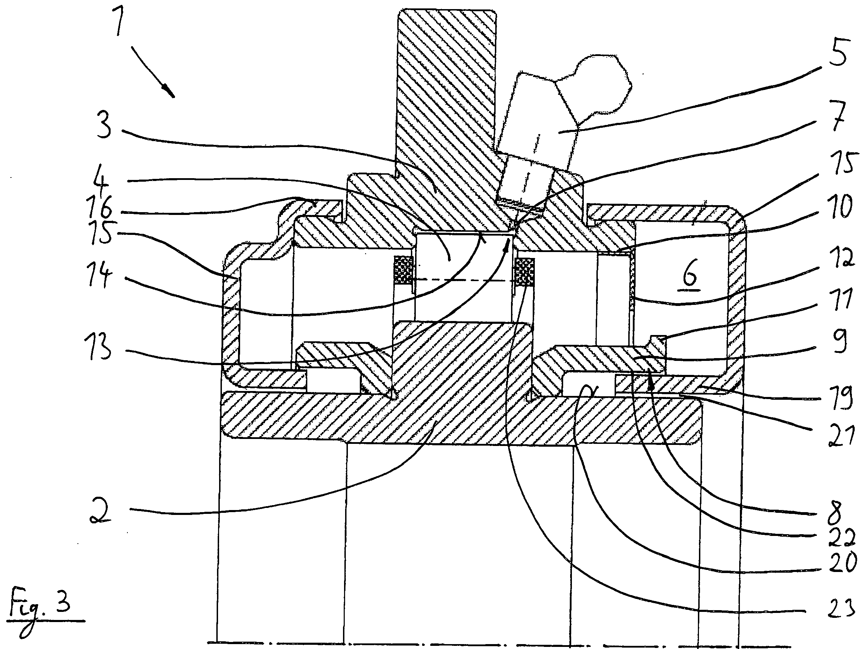

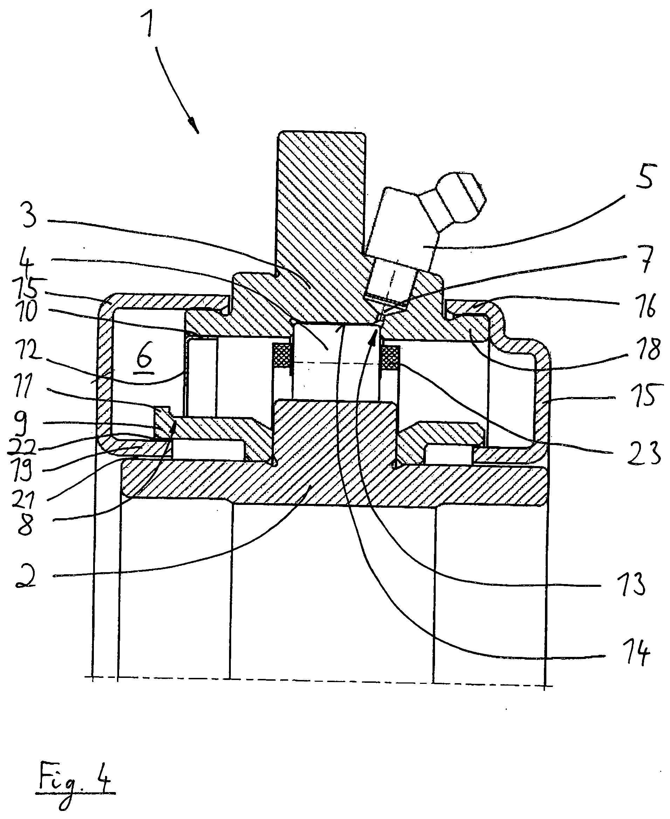

Weitere Lösungen sind in den Figuren 3 und 4 zu sehen. Hier ist in Abwandlung der zuvor diskutierten Ausführungsbeispiele vorgesehen, dass die Austrittsöffnung 7 des Schmierelements 5 nicht im Seitenbereich der Wälzkörper 4, sondern im Bereich der Laufbahn 14 des Außenrings 3 mündet. Konkret ist die Austrittsöffnung 7 des Schmierelements 5 hier in einem der beiden axialen Endbereichen 13 der Laufbahn 14 angeordnet.

Diese Endbereiche 13 der Laufbahn 14 sind zumeist mit einem Freistich versehen, in den die Austrittsöffnung 7 mündet.

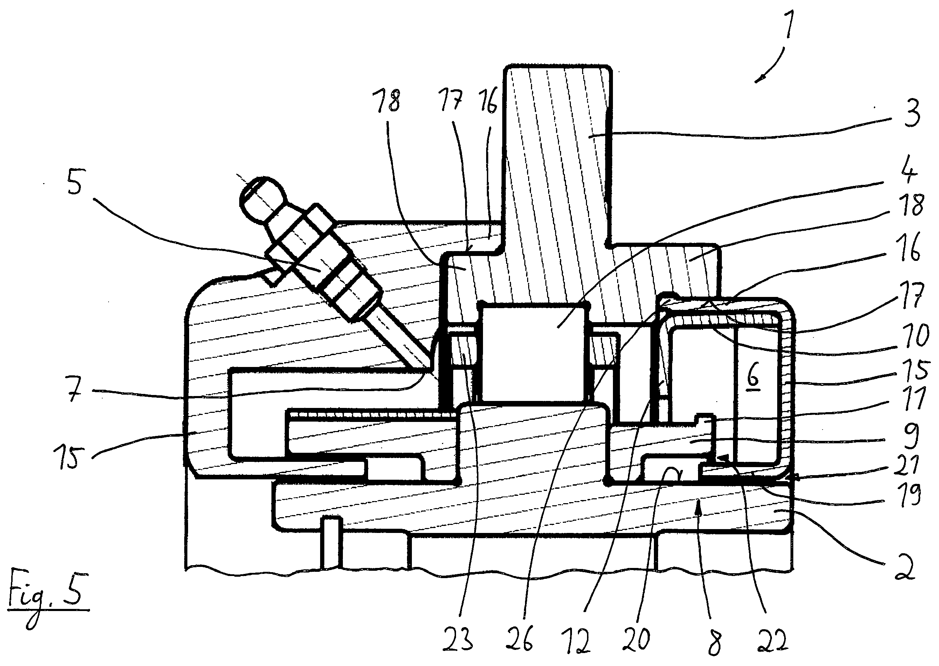

In Fig. 5 ist ein weiteres Ausführungsbeispiel der Erfindung gezeigt. Ein wesentlicher Unterschied zu den vorstehend beschriebenen Lösungen besteht hier darin, dass hinsichtlich des rechten Deckelelements 15 der Außenring 3 einen Trägerabschnitt 18 mit einem innenzylindrischen Sitz 17 hat, in den der sich axial erstreckende Abschnitt 16 des Deckelelements 15 eingeschoben bzw. eingepresst ist.

Angedeutet ist in dieser Figur auch die vorteilhafte Ausgestaltung, wonach am axialen Ende des sich axial erstreckenden Abschnitts 16 ein radial nach außen gebogener Abschnitt 26 vorliegt, der zum formschlüssigen Eingreifen in eine entsprechende ringnutförmige Ausnehmung im Außenring vorgesehen ist. Somit wird der Halt des Deckelelements 15 verbessert.

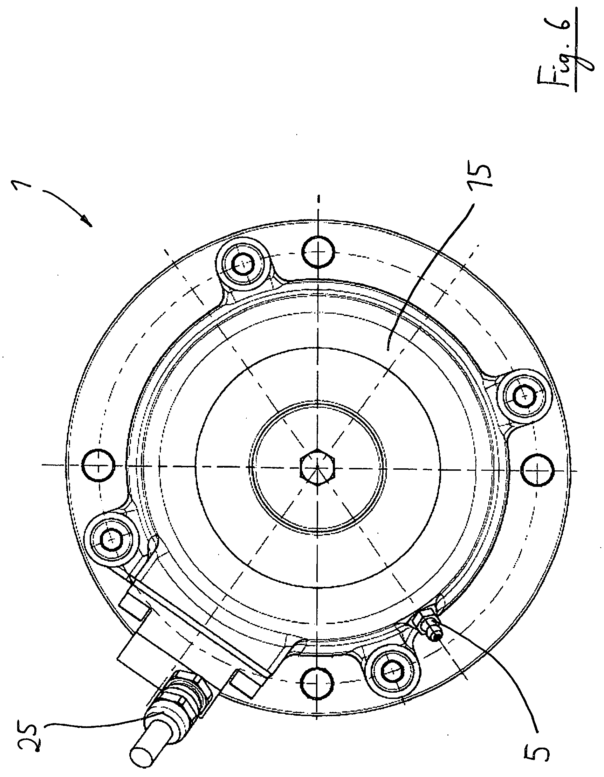

Bei der Lösung nach Fig. 6 ist vorgesehen, dass ein Sensorelement 25 am Wälzlager 1 angeordnet ist, um die Drehzahl des Lagers zu erfassen. In diesem Falle ist der im Betrieb des Lagers rotierende erste Ring 9 als Impulsgeber ausgestaltet, beispielsweise als Magnetring.

Es kann dabei in allen Ausführungsbeispielen vorgesehen werden, dass mehr als ein Schmierelement 5 über den Umfang des Wälzlagers 1 bzw. des Außenrings 3 angeordnet ist. Werden beispielsweise zwei solche Schmierelemente 5 eingesetzt, werden diese bevorzugt diametral gegenüberliegend am Umfang platziert.

Als Schmierelement 5 können übliche Schmiernippel zum Einsatz kommen.

Das Wälzlager 1 wird bei der Montage im Werk mit einer definierten Fettfüllung versehen. Das Nachschmieren des Lagers kann - aufgrund des gewählten Orts für das Schmierelement bzw. die Schmierelemente am nicht-drehenden Teil des Lagers - sowohl im Stillstand des Lagers als auch im Betrieb bei der Drehung desselben erfolgen.

Das Wälzlager kann in verschiedener Weise ausgeführt sein. Neben einer klassischen Ausgestaltung mit Stahlringen und Stahlwälzkörpern kann mit Blick auf einen möglichen Stromdurchgang eine Beschichtung der Ringe und/oder Wälzkörper vorgesehen werden, aber auch der Einsatz keramischer Bauteile, insbesondere Wälzkörper.

Die genannten Ringelemente sind bevorzugt als Blechumformteile (insbesondere im Falle der Teile 10 und 15) bzw. als Drehteile ausgeführt (im Falle der Teile 9) und werden mit Presspassung in die gewünschte Lage verbracht.

Vorgesehen werden können natürlich auch axiale Anschläge für die einzelnen Ringelemente, um eine einfache und reproduzierbare Montage zu ermöglichen.

Durch die Ausformung der einzelnen Ringelemente wird angestrebt, dass sich das verbrauchte Fett, gegebenenfalls vermischt mit neuem eingebrachten Fett, im Aufnahmeraum 6 sammelt. In den Ausführungsbeispielen ist jeweils nur ein Aufnahmeraum 6 vorgesehen; natürlich können auch beidseitig solche Aufnahmeräume 6 vorgesehen werden.

Infolge der Nachschmiermöglichkeit kann die Gebrauchsdauer des Fetts und somit des Wälzlagers erhöht werden, was wiederum unmittelbar eine positive Erhöhung der Lebensdauer des Fahrmotors zur Folge hat, in den die beschriebenen Lager eingesetzt sind. Irgendeine Art der Demontage zwecks Nachschmierung ist nicht erforderlich.

Das verbrauchte Fett muss nicht entfernt werden, da ein hinreichend großer Aufnahmeraum für Altfett zur Verfügung steht. Damit ist die vorgeschlagene Lösung sehr gut umweltverträglich.

### Bezugszeichenliste

- 1: Wälzlager
- 2: Innenring
- 3: Außenring
- 4: Wälzkörper
- 5: Schmierelement
- 6: Aufnahmeraum
- 7: Austrittsöffnung
- 8: Abteilung
- 9: erster Ring
- 10: zweiter Ring
- 11: sich radial nach außen erstreckender Abschnitt
- 12: sich radial nach innen erstreckender Abschnitt
- 13: axialer Endbereich der Laufbahn
- 14: Laufbahn
- 15: Deckelelement
- 16: sich axial erstreckender Abschnitt
- 17: zylindrischer Sitz
- 18: Trägerabschnitt
- 19: sich axial erstreckender Abschnitt
- 20: zylindrischer Abschnitt
- 21: Labyrinthspalt
- 22: Labyrinthspalt
- 23: Käfig
- 24: Bohrung
- 25: Sensorelement
- 26: sich radial nach außen erstreckender Abschnitt

## Patentansprüche

1. Wälzlager (1), umfassend einen Innenring (2) und einen Außenring (3), wobei zwischen Innenring (2) und Außenring (3) mindestens eine Reihe Wälzkörper (4) angeordnet ist, wobei mindestens ein Schmierelement (5) am Wälzlager (1) angeordnet ist, mit dem Schmierstoff in den Bereich der Wälzkörper (4) eingebracht werden kann, wobei im Wälzlager (1) ein Aufnahmeraum (6) für verbrauchten Schmierstoff angeordnet ist, der von der Austrittsöffnung (7) des mindestens einen Schmierelements (5) abgeteilt (8) ist,
**dadurch gekennzeichnet, dass**
die Abteilung (8) des Aufnahmeraums (6) durch einen am Innenring (2) angeordneten ersten Ring (9) mit einem sich radial nach außen erstreckenden Abschnitt (11) und durch einen am Außenring (3) angeordneten zweiten Ring (10) mit einem sich radial nach innen erstreckenden Abschnitt (12) erfolgt, wobei das Wälzlager (1) weiterhin mindestens ein seitlich angeordnetes Deckelelement (15) aufweist, das am Außenring (3) befestigt ist, wobei der Aufnahmeraum (6) von dem Deckelelement (15), von dem ersten Ring (9) und von dem zweiten Ring (10) begrenzt wird, wobei zwischen einem sich axial erstreckenden Abschnitt (19) des Deckelelements (15) und einem zylindrischen Abschnitt (20) des Innenrings (2) ein Labyrinthspalt (21) ausgebildet wird und wobei ein weiterer Labyrinthspalt (22) zwischen dem sich axial erstreckenden Abschnitt (19) des Deckelelements (15) und dem am Innenring (2) angeordneten ersten Ring (9) ausgebildet wird.

2. Wälzlager nach Anspruch 1, **dadurch gekennzeichnet, dass** die Austrittsöffnung (7) des Schmierelements (5) in einem linken oder rechten Seitenbereich der Wälzkörper (4) liegt.

3. Wälzlager nach Anspruch 1, **dadurch gekennzeichnet, dass** die Austrittsöffnung (7) des Schmierelements (5) in einem axialen Endbereich (13) der Laufbahn (14) des Außenrings (3) liegt.

4. Wälzlager nach einem der Ansprüche 1 bis 3, **dadurch gekennzeichnet, dass** das Deckelelement (15) mit einem sich axial erstreckenden Abschnitt (16) auf einem zylindrischen Sitz (17) eines Trägerabschnitts (18) des Außenrings (3) angeordnet ist.

5. Wälzlager nach einem der Ansprüche 1 bis 5, **dadurch gekennzeichnet, dass** es ein Sensorelement (25) umfasst, wobei das Sensorelement (25) vorzugsweise in eines der Deckelelemente (15) eingebaut ist.

6. Wälzlager nach Anspruch 5, **dadurch gekennzeichnet, dass** das Sensorelement (25) als Element zur Erfassung der Drehzahl und/oder des Drehwinkels des Wälzlagers ausgebildet ist, wobei ein sich im Betrieb des Wälzlagers drehender Ring (9) als Impulsgeber ausgebildet ist.

7. Wälzlager nach einem der Ansprüche 1 bis 6, **dadurch gekennzeichnet, dass** es ein Lager eines Fahrmotors eines Schienenfahrzeugs ist.

## Claims

1. Anti-friction bearing (1), comprising an inner ring (2) and an outer ring (3), at least one row of rolling bodies (4) being arranged between the inner ring (2) and the outer ring (3), at least one lubricating element (5) being arranged on the antifriction bearing (1), by way of which lubricating element (5) lubricant can be introduced into the region of the rolling bodies (4), a receiving space (6) for used lubricant, which space is separated (8) from the outlet opening (7) of the at least one lubricating element (5) being arranged in the anti-friction bearing (1), **characterized in that** the separation (8) of the receiving space (6) is brought about by way of a first ring (9) which is arranged on the inner ring (2) with a radially outwardly extending section (11) and by way of a second ring (10) which is arranged on the outer ring (3) with a radially inwardly extending section (12), the anti-friction bearing (1) having, furthermore, at least one laterally arranged cover element (15) which is fastened to the outer ring (3), the receiving space (6) being delimited by the cover element (15), by the first ring (9) and by the second ring (10), a labyrinth gap (21) being configured between an axially extending section (19) of the cover element (15) and a cylindrical section (20) of the inner ring (2), and a further labyrinth gap (22) being configured between the axially extending section (19) of the cover element (15) and the first ring (9) which is arranged on the inner ring (2).

2. Anti-friction bearing according to Claim 1, **characterized in that** the outlet opening (7) of the lubricating element (5) lies in a left-hand or righthand side region of the rolling bodies (4).

3. Anti-friction bearing according to Claim 1, **characterized in that** the outlet opening (7) of the lubricating element (5) lies in an axial end region (13) of the raceway (14) of the outer ring (3).

4. Anti-friction bearing according to one of Claims 1 to 3, **characterized in that** the cover element (15) is arranged with an axially extending section (16) on a cylindrical seat (17) of a carrier section (18) of the outer ring (3).

5. Anti-friction bearing according to one of Claims 1 to 5, **characterized in that** it comprises a sensor element (25), the sensor element (25) preferably being installed into one of the cover elements (15).

6. Anti-friction bearing according to Claim 5, **characterized in that** the sensor element (25) is configured as an element for detecting the rotational speed and/or the angle of rotation of the anti-friction bearing, a ring (9) which rotates during operation of the anti-friction bearing being configured as a pulse generator.

7. Anti-friction bearing according to one of Claims 1 to 6, **characterized in that** it is a bearing of a traction engine of a rail vehicle.

## Revendications

1. Palier à roulement (1), comprenant une bague interne (2) et une bague externe (3), au moins une rangée de corps de roulement (4) étant disposée entre la bague interne (2) et la bague externe (3), au moins un élément de lubrification (5) étant disposé au niveau du palier à roulement (1), avec lequel du lubrifiant peut être introduit dans la région des corps de roulement (4), un espace de réception (6) pour le lubrifiant usé étant disposé dans le palier à roulement (1), lequel espace de réception est divisé (8) par l'ouverture de sortie (7) de l'au moins un élément de lubrification (5), **caractérisé en ce que** la division (8) de l'espace de réception (6) s'effectue au moyen d'une première bague (9) disposée au niveau de la bague interne (2) avec une portion (11) s'étendant radialement vers l'extérieur et d'une deuxième bague (10) disposée au niveau de la bague externe (3) avec une portion (12) s'étendant radialement vers l'intérieur, le palier à roulement (1) présentant en outre au moins un élément de recouvrement disposé latéralement (15), lequel est fixé au niveau de la bague externe (3), l'espace de réception (6) étant limité par l'élément de recouvrement (15), par la première bague (9) et par la deuxième bague (10), un interstice à labyrinthe (21) étant réalisé entre une portion s'étendant axialement (19) de l'élément de recouvrement (15) et une portion cylindrique (20) de la bague interne (2), et un autre interstice à labyrinthe (22) étant réalisé entre la portion s'étendant axialement (19) de l'élément de recouvrement (15) et la première bague (9) disposée au niveau de la bague interne (2).

2. Palier à roulement selon la revendication 1, **caractérisé en ce que** l'ouverture de sortie (7) de l'élément de lubrification (5) est située dans une région latérale gauche ou droite des corps de roulement (4).

3. Palier à roulement selon la revendication 1, **caractérisé en ce que** l'ouverture de sortie (7) de l'élément de lubrification (5) est située dans une région d'extrémité axiale (13) du chemin de roulement (14) de la bague externe (3).

4. Palier à roulement selon l'une quelconque des revendications 1 à 3, **caractérisé en ce que** l'élément de recouvrement (15) est disposé avec une portion s'étendant axialement (16) sur un siège cylindrique (17) d'une portion de support (18) de la bague externe (3).

5. Palier à roulement selon l'une quelconque des revendications 1 à 5, **caractérisé en ce qu'**il comprend un élément de capteur (25), l'élément de capteur (25) étant de préférence incorporé dans l'un des éléments de recouvrement (15).

6. Palier à roulement selon la revendication 5, **caractérisé en ce que** l'élément de capteur (25) est réalisé sous forme d'élément pour détecter la vitesse de rotation et/ou l'angle de rotation du palier à roulement, une bague (9) tournant pendant le fonctionnement du palier à roulement étant réalisée sous forme de générateur d'impulsions.

7. Palier à roulement selon l'une quelconque des revendications 1 à 6, **caractérisé en ce qu'**il s'agit d'un palier d'un moteur de conduite d'un véhicule ferroviaire.
